# EUROPÄISCHE PATENTSCHRIFT

(11) **EP 3 586 016 B1**
(45) Veröffentlichungstag und Bekanntmachung des Hinweises auf die Patenterteilung: **27.03.2024**
(21) Anmeldenummer: 18707329.1
(22) Anmeldetag: 21.02.2018
(51) Int. Cl.: F16B 37/04, F16B 7/18

(54) **BEFESTIGUNGSVORRICHTUNG UND BEFESTIGUNGSBAUGRUPPE**
FASTENING DEVICE AND FASTENING SUBASSEMBLY
DISPOSITIF DE FIXATION ET MODULE DE FIXATION

(30) Priorität: 23.02.2017 DE 102017103770
(43) Veröffentlichungstag der Anmeldung: 01.01.2020
(73) Patentinhaber: MÜPRO Services GmbH, 65205 Wiesbaden (DE)
(72) Erfinder: SCHEINBERGER, Marcus, 65719 Hofheim (DE); ROOS, Dominik, 65510 Idstein Wörsdorf (DE); ALT, Janosch, 65207 Wiesbaden (DE)
(74) Vertreter: Boult Wade Tennant LLP
(86) Internationale Anmeldenummer: PCT/EP2018/054300
(87) Internationale Veröffentlichungsnummer: WO 2018/153929

(56) Entgegenhaltungen:
- WO-A1-2016/188708
- DE-A1-102015 118 314
- US-A- 5 067 863
- US-A1- 2005 055 809

## Beschreibung

Die Erfindung betrifft eine Befestigungsvorrichtung zum Verklemmen in einer Profilschiene durch Eindrehen im eine Drehachse, die einen im Wesentlichen C-förmigen Querschnitt und einen Längsschlitz mit gegenüberliegenden Schlitzflanken aufweist, wobei die Befestigungsvorrichtung eine Deckplatte zur Auflage auf der Profilschiene, indem z.B. die Länge und/oder Breite der Deckplatte größer ist als die Breite des Längsschlitzes der Profilschiene, eine Gewin-deplatte, die eine Gewindebohrung aufweist und eine Länge größer als die Breite des Längsschlitzes und eine Breite kleiner als die Breite des Längsschlitzes besitzt, und eine an der Deckplatte angeordneten Haltevorrichtung für die Gewindeplatte zum Einstecken in die Profilschiene aufweist, wobei zwischen der Deckplatte und der Gewindeplatte bezüglich der Drehachse diametral gegenüberliegende Federanordnungen zur Anlage an den Schlitzflanken des Längsschlitzes vorgesehen sind. Die Erfindung betrifft des Weiteren eine Befestigungsbaugruppe mit einer solchen Befestigungsvorrichtung und mit einer Profilschiene, die einen im Wesentlichen C-förmigen Querschnitt und einen Längsschlitz mit gegenüberliegenden Schlitzflanken aufweist, wobei die Länge der Gewindeplatte in Einschubrichtung größer ist als die Breite des Längsschlitzes und die Breite der Gewindeplatte quer zur Einschubrichtung kleiner ist als die Breite des Längsschlitzes.

Solche Befestigungsvorrichtungen sind beispielsweise in der EP 1 902 222 B1 und der DE 10 2007 014 795 A1 gezeigt.

Zum Befestigen der Last an der Profilschiene wird eine solche Befestigungsvorrichtung mit der Gewindeplatte so ausgerichtet, dass die Längsrichtung der Gewindeplatte im Wesentlichen mit der Längsrichtung der Profilschiene übereinstimmt. Anschließend wird die Befestigungsvorrichtung mit der Haltevorrichtung und der Gewindeplatte in den Längsschlitz eingeschoben, bis die Deckplatte an der Außenseite der Profilschiene aufliegt.

Nachfolgend wird die Befestigungsvorrichtung aus dieser Zwischenmontageposition um eine Drehachse in eine Vormontageposition gedreht, in der die Gewindeplatte die Schlitzflanken hintergreift. Abschließend wird die Gewindeplatte in die Endmontageposition gegen die Innenfläche der Schlitzflanken gezogen, so dass die Schlitzflanken zwischen der Gewindeplatte und der Deckplatte und/oder dem Anbauteil geklemmt sind, wodurch das Anbauteil an der Profilschiene fixiert ist. Die Deckplatte kann als schwach dimensioniertes einzig der Aufgabe dienen, die Befestigungsvorrichtung vorläufig mit der Schiene zu verklemmen, sie kann aber auch als entsprechend stabil ausgeführtes Teil unmittelbar die Klemmkräfte im angezogenen Endzustand übertragen und dann z.B. zwischen der Profilschiene und dem Anbauteil liegen. Wenn die Deckplatte aus einem Kunststoff besteht, kann sie einstückig mit dem Haltekäfig ausgebildet sein. Die Deckplatte und der Haltekäfig können aber auch als zwei getrennt hergestellte Teile in geeigneter weise aneinander befestigt sein, wobei sie auch aus unterschiedlichen Werkstoffen bestehen können. Die Befestigungsvorrichtung ermöglicht es also, die Gewindeplatte in die Profilschiene einzuführen und anschließend in die Vormontageposition zu drehen.

Die Haltevorrichtung hat insbesondere in der Vormontageposition Spiel im Längsschlitz, so dass die Befestigungsvorrichtung nicht oder nicht ausreichend im Längsschlitz gehalten und/oder zentriert ist. Um die Befestigungsvorrichtung im Längsschlitz der Profilschiene zu klemmen und so ein Spiel zwischen den Schlitzflanken und der Befestigungsvorrichtung zu reduzieren, weist die in der EP 1 775 482 B1 gezeigte Befestigungsvorrichtung unterhalb der Deckplatte zwei gegenüberliegende Klemmelemente auf. Bei einem Verdrehen der Befestigungsvorrichtung von der Zwischenmontageposition in die Vormontageposition gelangen diese mit den Schlitzflanken des Längsschlitzes in Anlage und werden vorgespannt, wodurch die Befestigungsvorrichtung im Längsschlitz der Profilschiene verklemmt und/oder zentriert wird. Durch die Klemmung kann beispielsweise auch eine Vorfixierung im Längsschlitz erfolgen, da durch die Klemmkraft ein Verschieben der Befestigungsvorrichtung in Längsrichtung des Längsschlitzes nur gegen einen höheren Widerstand möglich ist.

Aufgabe der Erfindung ist es, eine Befestigungsvorrichtung sowie eine Befestigungsbaugruppe bereitzustellen, die einen verbesserten Halt sowie eine verbesserte Zentrierung der Befestigungsvorrichtung in der Profilschiene ermöglichen. US 2005 055 809 A1 zeigt eine Befestigungsvorrichtung für eine Profilschiene. WO 2016 188 708 A1 zeigt eine Befestigungsvorrichtung für eine Profilschiene mit einer Haltevorrichtung.

Hauptmerkmale der Erfindung sind in den Ansprüchen 1 und 10 angegeben. Ausgestaltungen sind Gegenstand der Ansprüche 2 bis 9 sowie 11.

Zur Lösung der Aufgabe ist bei einer Befestigungsvorrichtung zum Verklemmen in einer Profilschiene durch Eindrehen um eine Drehachse, die einen im Wesentlichen C-förmigen Querschnitt und einen Längsschlitz aufweist, wobei die Befestigungsvorrichtung eine Deckplatte, deren Länge und/oder Breite größer ist als die Breite des Längsschlitzes der Profilschiene, eine Gewindeplatte, die eine Gewindebohrung aufweist und eine Länge größer als die Breite des Längsschlitzes und eine Breite kleiner als die Breite des Längsschlitzes besitzt, und eine an der Deckplatte angeordneten Haltevorrichtung für die Gewindeplatte zum Einstecken in die Profilschiene aufweist, wobei zwischen der Deckplatte und der Gewindeplatte bezüglich der Drehachse diametral gegenüberliegende Federanordnungen zur Anlage an den Schlitzflanken des Längsschlitzes vorgesehen sind, vorgesehen, dass die Federanordnungen zum Verklemmen der Befestigungsvorrichtung gegen die Schlitzflanken des Längsschlitzes vorgesehen sind und jeweils zwei sich von der Haltevorrichtung bezüglich der Drehachse radial nach außen weg erstreckende, gekrümmte Federlaschen aufweisen, die sich jeweils bezüglich einer Umfangsrichtung um die Haltevorrichtung in entgegengesetzte Richtungen erstrecken.

Die Federlaschen sind so angeordnet, dass bei einem Drehen der mit der Haltevorrichtung bzw. der Gewindeplatte in den Längsschlitz der Profilschiene eingeschobenen Befestigungsvorrichtung jeweils eine oder beide Federlaschen der Federanordnungen mit den Rändern des Längsschlitzes in Anlage gelangen und vorgespannt werden. Dadurch wird die Befestigungsvorrichtung im Längsschlitz verklemmt und ist so spielfrei an der Profilschiene gehalten. Durch die zwei Federlaschen einer Federanordnung ist sichergestellt, dass unabhängig von der Drehrichtung zumindest eine Federlasche einer Federanordnung bei einem Drehen der Befestigungsvorrichtung mit einem Rand in Anlage gelangt und vorgespannt wird. Es erfolgt also unabhängig von der Drehrichtung und der Position der Befestigungsvorrichtung eine zuverlässige Verklemmung und Zentrierung der Befestigungsvorrichtung in der Profilschiene. Sind jeweils beide Fe-derlaschen einer Federanordnung vorgespannt, ist zudem eine höhere Klemmkraft bereitgestellt, durch die eine bessere Verklemmung und/oder Zentrierung im Längsschlitz der Profilschiene erfolgen kann.

Die Federlaschen einer Federanordnung erstrecken sich vorzugsweise jeweils aufeinander zu, so dass unabhängig von der Drehrichtung der Befestigungsvorrichtung jeweils eine Federlasche einer Federanordnung am Rand des Längsschlitzes anliegt und die Befestigungsvorrichtung hält und/oder zentriert. In der Vormontageposition, in der die Gewindeplatte die Schlitzflanken hintergreift, sind beispielsweise jeweils beide Federlaschen einer Federanordnung vorgespannt, so dass eine hohe Klemmkraft bereitgestellt werden kann.

Durch die Form der Federlaschen einer Federanordnung bzw. deren Anordnung relativ zueinander kann auch eine Ruhelage der Befestigungsvorrichtung an der Profilschiene definiert sein, die der Vormontageposition entspricht, so dass die Befestigungsvorrichtung nicht versehentlich zurück in die Zwischenmontageposition gelangen kann. Die freien Enden der Federla-sehen einer Federanordnung können beispielsweise in Umfangsrichtung beabstandet voneinander angeordnet sein, wobei die Ruhelage erreicht ist, wenn jeweils beide freien Enden der Federlaschen einer Federanordnung an einem Rand des Längsschlitzes anliegen.

Die Federlaschen einer Federanordnung können sich auch in radialer Richtung überlappen. In Umfangsrichtung ist also zwischen den Federlaschen kein Bereich ohne Federlasche vorhanden. Dies hat den Vorteil, dass stets zumindest einer Federlasche am Rand des Längsschlitzes anliegt. Zudem kann die radial innenliegende Federlasche die überlappende radial äußere Federlasche stützen, so dass eine höhere Federkraft bereitgestellt werden kann. Die sich überlappenden Federlaschen können in unbelastetem Zustand aneinander anliegen oder beabstandet voneinander angeordnet sein und erst bei einer auf die radial äußere Federlasche wirkenden Kraft miteinander in Anlage gelangen.

Die radial innenliegende Federlasche kann ein radial einwärts umgebogenes freies Ende aufweisen. Die Federelemente haben beispielsweise im Wesentlichen die gleiche Krümmung und das äußere Ende der radial innenliegenden Federlasche ist so umgebogen, dass dieses in Radialrichtung unter die radial außenliegende Lasche ragt.

Die Federlaschen einer Federanordnung können auch unterschiedliche Krümmungen aufweisen. Durch die unterschiedliche Krümmung kann beispielsweise die Überlappung der Federla-sehen einer Federanordnung einfacher hergestellt werden. Darüber hinaus können durch unterschiedliche Krümmungen unterschiedliche Federkräfte der beiden Federlaschen der Federanordnungen bereitgestellt werden. Dadurch kann beispielsweise eine bevorzugte Drehrichtung der Befestigungsvorrichtung vorgegeben werden. Die Federkraft der in der bevorzugten Drehrichtung vorderen Federlasche kann beispielsweise geringer sein, wodurch der Widerstand beim Drehen der Befestigungsvorrichtung in dieser Drehrichtung geringer ist bzw. die Federkraft der in Drehrichtung hinteren Federlasche kann höher sein, so dass in der entgegengesetzten Drehrichtung ein höherer Widerstand beim Drehen der Befestigungsvorrichtung vorhanden ist. Dadurch kann ein Bediener bei der Montage die bevorzugte Drehrichtung einfach erkennen.

An zumindest einer Federlasche kann ein Drehanschlag vorgesehen ist, der ein Überdrehen der Befestigungsvorrichtung in der Profilschiene verhindert.

Des Weiteren kann die Haltevorrichtung einen in Umfangsrichtung umlaufendem, insbesondere ringförmigen, Rahmen aufweisen, an dem die Federlaschen angeordnet sind, wodurch das Gewicht der Befestigungsvorrichtung reduziert werden kann. Innerhalb dieses Rahmens kann des Weiteren ein Kanal für eine Gewindestange oder eine Schraube vorgesehen sein.

Optional kann eine Gewindestange oder eine Schraube mit einem zum Innengewinde der Gewindeplatte korrespondierenden Außengewinde vorgesehen sein, die in das Innengewinde der Gewindeplatte eingedreht ist und die auf der der Gewindeplatte entgegengesetzten Seite der Deckplatte über die Deckplatte vorsteht. Die Gewindestange kann sich an der Deckplatte oder einem Anbauteil mit einem Kopf oder einer aufgeschraubten Mutter abstützen. Durch Eindrehen der Gewindestange in das Innengewinde der Gewindeplatte wird die Gewindeplatte gegen die Deckplatte gezogen bzw. durch ein Herausdrehen aus der Gewindeplatte eine Bewegung von der Deckplatte weg ermöglicht.

Es lässt sich weiterhin sagen, dass sich durch die erfindungsgemäße Anordnung von gegenläufigen Federlaschen Ausführungsformen der Haltevorrichtung überhaupt erst als Kunststoffteil mit funktionssicherer Radialklemmung bilden lassen. Die Haltevorrichtung kann beispielsweise mit den Federlaschen einstückig aus Kunststoff gefertigt sein.

Zur Lösung der Aufgabe ist des Weiteren eine Befestigungsbaugruppe mit einer vorstehend beschriebenen Befestigungsvorrichtung und mit einer Profilschiene vorgesehen, die einen im Wesentlichen C-förmigen Querschnitt und einen Längsschlitz aufweist, wobei die Länge der Gewindeplatte größer ist als die Breite des Längsschlitzes und die Breite der Gewindeplatte kleiner ist als die Breite des Längsschlitzes. Die Befestigungsvorrichtung ist in einer ersten Orientierung, in der die Längsrichtung der Gewindeplatte der Längsrichtung des Längsschlitzes entspricht, mit der Haltevorrichtung in einer Einsteckrichtung in eine Zwischenmontageposition den Längsschlitz einführbar, in der die Deckplatte auf der Profilschiene aufliegt. Des Weiteren ist die Befestigungsvorrichtung von der Zwischenmontageposition in Drehrichtung in eine Vormontageposition drehbar, in der die Gewindeplatte die Ränder des Längsschlitzes hintergreift, und in der zumindest eine Federlasche jeder Federanordnung an den Schlitzflanken des Längsschlitzes anliegt.

Um ein Überdrehen der Befestigungsvorrichtung über die Vormontageposition hinaus zu vermeiden, kann an der Deckplatte und/oder an der Haltevorrichtung zumindest ein Drehanschlag vorgesehen sein, der in der Vormontageposition an der Profilschiene anliegt und ein Drehen in Montagerichtung über die Vormontageposition hinaus verhindert.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine Explosionsansicht einer ersten Ausführungsform einer erfindungsgemäßen Befestigungsbaugruppe;
- Fig. 2a: eine perspektivische Ansicht der Befestigungsbaugruppe aus Fig. 1 ;
- Fig. 2b: eine Schnittansicht durch die Befestigungsbaugruppe aus Fig. 2a
- Fig. 2c: eine Draufsicht auf die Befestigungsbaugruppe aus Fig. 2a;
- Fig. 3a: eine erste perspektivische Ansicht der Befestigungsvorrichtung der Befestigungsbaugruppe aus Fig. 2a;
- Fig. 3b: eine zweite perspektivische Ansicht der Befestigungsvorrichtung der Befestigungsbaugruppe aus Fig. 2a;
- Fig. 4a: eine Schnittansicht durch die Befestigungsvorrichtung aus Fig. 3a und Fig. 3b;
- Fig. 4b: eine Draufsicht auf die Befestigungsvorrichtung aus Fig. 3a und Fig. 3b;
- Fig. 4c: eine zweite Schnittansicht durch die Befestigungsvorrichtung aus Fig. 3a und Fig. 3b;
- Fig. 4d: eine Ansicht der Unterseite der Befestigungsvorrichtung aus Fig. 3a und Fig. 3b;
- Fig. 5a: eine erste perspektivische Ansicht der Montage einer Gewindeplatte in der Befestigungsvorrichtung aus Fig. 3a und Fig. 3b;
- Fig. 5b: eine zweite perspektivische Ansicht der Montage einer Gewindeplatte in der Befestigungsvorrichtung aus Fig. 3a und Fig. 3b;
- Fig. 6a: eine erste perspektivische Ansicht der Befestigungsvorrichtung aus Fig. 3a und Fig. 3b mit einer Gewindeplatte;
- Fig. 6b: eine zweite perspektivische Ansicht der Befestigungsvorrichtung aus Fig. 3a und Fig. 3b mit einer Gewindeplatte;
- Fig. 7a: eine Draufsicht auf die Befestigungsvorrichtung aus Fig. 6a und Fig. 6b;
- Fig. 7b: eine Schnittansicht durch die Befestigungsvorrichtung aus Fig. 6a und Fig. 6b;
- Fig. 8: eine Draufsicht auf eine Befestigungsbaugruppe mit der Befestigungsvorrichtung aus Fig. 6a und Fig. 6b;
- Fig. 9: Eine Explosionsansicht einer ersten Ausführungsform einer erfindungsgemäßen Befestigungsbaugruppe;
- Fig. 10a: eine perspektivische Ansicht der Befestigungsbaugruppe aus Fig. 9;
- Fig. 10b: eine Schnittansicht durch die Befestigungsbaugruppe aus Fig. 10a
- Fig. 10c: eine Draufsicht auf die Befestigungsbaugruppe aus Fig. 10a;
- Fig. 11a: eine erste perspektivische Ansicht des Halteelements der Befestigungsvorrichtung der Befestigungsbaugruppe aus Fig. 10a;
- Fig. 11b: eine zweite perspektivische Ansicht des Halteelements aus Fig. 1 1 a;
- Fig. 12a: eine Schnittansicht durch das Haltelement aus Fig. 1 1 a und Fig. 1 1 b;
- Fig. 12b: eine zweite Schnittansicht durch das Haltelement aus Fig. 1 1 a und Fig. 1 1 b;
- Fig. 12c: eine Draufsicht auf das Haltelement aus Fig. 1 1 a und Fig. 1 1 b;
- Fig. 13a: eine erste Explosionsansicht der Befestigungsvorrichtung der Befestigungsbaugruppe aus Fig.10a;
- Fig. 13b: eine zweite Explosionsansicht der Befestigungsvorrichtung der Befestigungsbaugruppe aus Fig.10a;
- Fig. 14a: eine erste perspektivische Ansicht der Befestigungsvorrichtung aus Fig.13a und Fig. 13b;
- Fig. 14b: eine zweite perspektivische Ansicht der Befestigungsvorrichtung aus Fig. 13a und Fig. 13b;
- Fig. 15a: eine Draufsicht auf die Befestigungsvorrichtung aus Fig. 14a und Fig. 14b; und
- Fig. 15b: eine Schnittansicht durch die Befestigungsvorrichtung aus Fig. 14a und Fig. 14b.

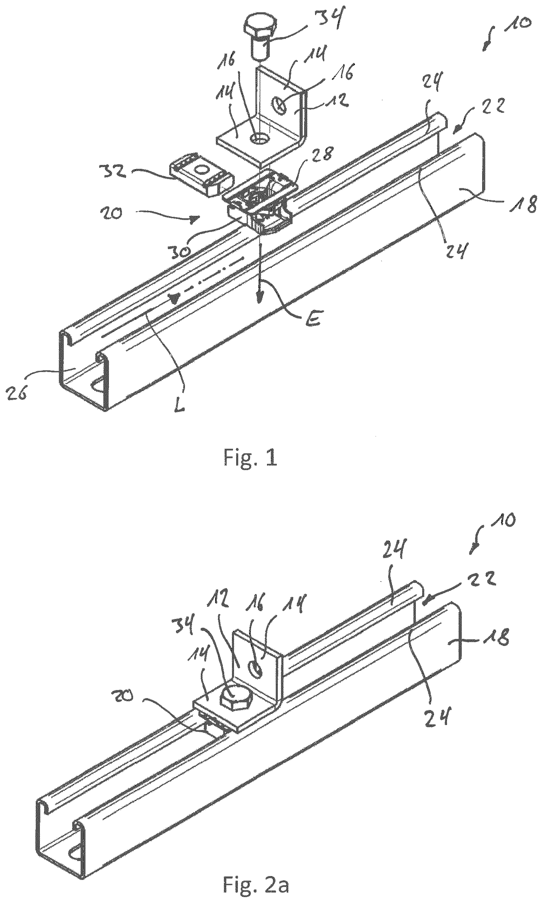

Die Figuren 1 , 2a bis 3c sowie 8 zeigen eine Befestigungsbaugruppe 10 zur Befestigung einer Last, beispielsweise eines Anbauteils 12. Das Anbauteil 12 ist hier ein Winkelblech mit zwei rechtwinklig zueinander stehenden Schenkeln 14 mit jeweils einer Bohrung 16. Das Anbauteil 12 kann auch eine andere Form aufweisen. Des Weiteren kann das Winkelblech lediglich ein Adapter sein, um eine Last an der Profilschiene 18 zu befestigen.

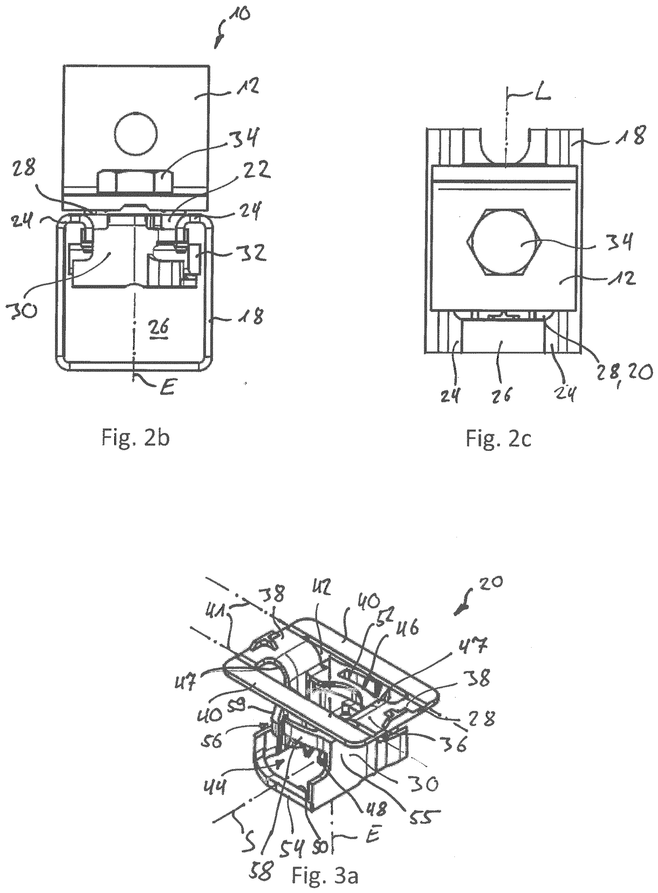

Die in den Figuren 3a bis 7b gezeigte Befestigungsbaugruppe 10 weist eine Profilschiene 18 sowie eine Befestigungsvorrichtung 20 auf. Die Profilschiene 18 hat einen im Wesentlichen C-förmigen Querschnitt und weist einen Längsschlitz 22 auf, der von zwei im Wesentlichen parallelen Schlitzflanken 24 begrenzt ist. Hinter den Schlitzflanken 24 ist ein Aufnahmeraum 26 vor-gesehen.

Die in den Figuren 2 bis 8 gezeigte Befestigungsvorrichtung 20 weist eine Deckplatte 28, eine Haltevorrichtung 30 für eine Gewindeplatte 32, eine Gewindeplatte 32 sowie eine Gewindestange 34 auf.

Mit der Befestigungsvorrichtung 20 kann die Gewindeplatte 32 in den Längsschlitz 22 eingeführt und in diesem um eine Drehachse D in eine Vormontageposition gedreht werden, in der die Gewindeplatte 32 die Schlitzflanken 24 hintergreift. Anschließend kann die Gewindeplatte 32 durch die Gewindestange 34 gegen das Anbauteil 12 in eine Endmontageposition gezogen werden, in der die Schlitzflanken 24 zwischen dem Anbauteil 12 und der Gewindeplatte 32 geklemmt sind, wodurch das Anbauteil 12 an der Profilschiene 18 fixiert ist.

Die Deckplatte 28 ist im Wesentlichen rechtwinklig (alternativ auch polygon, oval oder sternförmig) ausgebildet und weist eine Grundplatte 36 auf, die aus zwei parallelen Stegen 38 gebildet ist, sowie zwei Seitenplatten 40, die an entgegengesetzten Rändern der Grundplatte 36 um eine Sollverformungsstelle 41 schwenkbar gelagert sind. Beispielsweise ist die Sollverformungsstelle 41 zwischen der Grundplatte 36 und den Seitenplatten 40 jeweils durch ein Filmscharnier gebildet. Die Deckplatte 28 weist des Weiteren eine Öffnung 42 für die Gewindestange 34 auf.

Die Haltevorrichtung 30 erstreckt sich in einer Einsteckrichtung E im Wesentlichen senkrecht von der Deckplatte 28 weg und weist einen im Wesentlichen parallel zur Ebene der Deckplatte 28 verlaufende Aufnahme 44 für die Gewindeplatte 32 auf, in der die Gewindeplatte 32 im Wesentlichen parallel zur Deckplatte 28 gehalten werden kann. Die Aufnahme 44 erstreckt sich durch die Haltevorrichtung 30 hindurch, so dass die Gewindeplatte 32 in eine quer zur Einsteckrichtung E verlaufenden Einschubrichtung S in die Aufnahme 44 eingeschoben werden kann.

Durch die Deckplatte 28 sowie die Haltevorrichtung 30 erstreckt sich eine in Einsteckrichtung E verlaufende Durchtrittsöffnung 46 für die Gewindestange 34.

Die Aufnahme 44 wird an einer der Deckplatte 28 zugewandten Oberseite 48 und an einer der Deckseite abgewandten Unterseite 50 jeweils von einem Rahmen 52, 54 begrenzt. Die Höhe der Aufnahme 44 entspricht im Wesentlichen der Höhe der Gewindeplatte 32, so dass eine eingeschobene Gewindeplatte 32 in Einsteckrichtung E kein oder nur ein geringes Spiel aufweist. Die Rahmen 52, 54 sind durch zwei bezüglich der Durchtrittsöffnung 46 diametral gegenüberliegende Stege 55 verbunden, die die seitliche Begrenzung der Aufnahme 44 bilden.

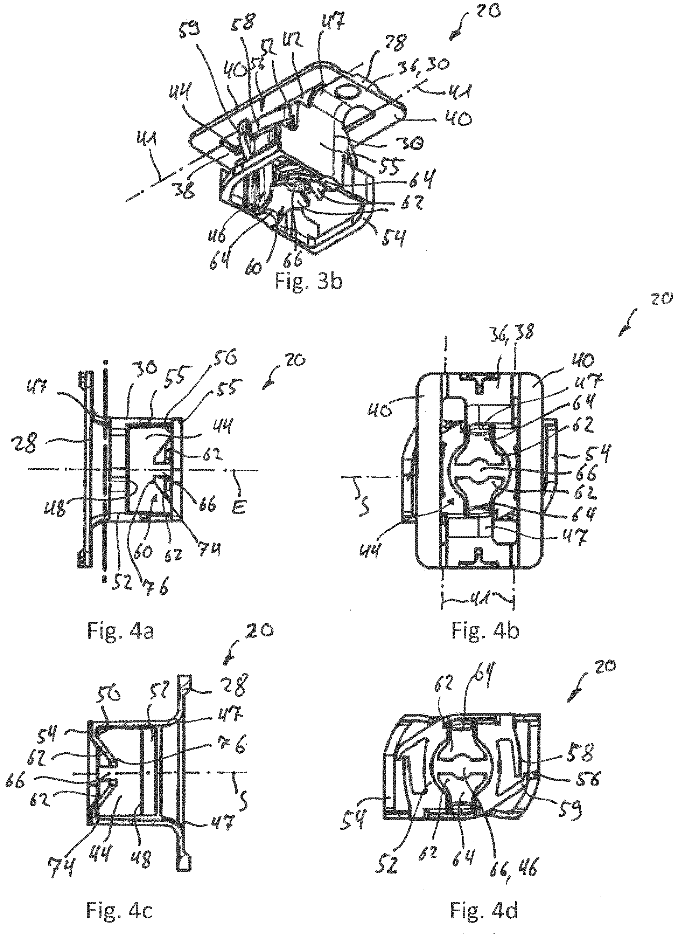

Wie in den Figuren 3a, 3b und 4d zu sehen ist, sind am oberen Rahmen 52 des Weiteren außenseitig zwei Federanordnungen 56 vorgesehen, die bezüglich der Drehachse D diametral gegenüberliegend angeordnet sind und jeweils zwei bezüglich der Drehachse D 46 radial federnde Federlaschen 58, 59 aufweisen. Die Federlaschen 58, 59 erstrecken sich jeweils bezüglich der Drehachse D radial nach außen weg und sind in Umfangsrichtung bezüglich der Drehachse D gekrümmt. Des Weiteren erstrecken sich die Federlaschen 58, 59 einer Federanordnung 56 bezüglich einer Umfangsrichtung um die Haltevorrichtung 30 bzw. um die Drehachse D in entgegengesetzte Richtungen und aufeinander zu.

Wie insbesondere in Figur 4d zu sehen ist, überlappen sich die Federlaschen 58, 59 einer Federanordnung 56 jeweils in radialer Richtung bezüglich der Drehachse D und weisen unterschiedliche Krümmungen auf.

Am unteren Rahmen 54 ist des Weiteren eine konzentrisch zur Drehachse D angeordnete und in die Aufnahme 44 ragende Halteeinrichtung 60 für die Gewindeplatte 32 vorgesehen. Wie in den Figuren 4a und 4c zu sehen ist, ist die Halteeinrichtung 60 mit einem ersten Ende 74 am Rahmen 54 und somit an der Haltevorrichtung 30 befestigt und erstreckt sich mit einem zweiten, freien Ende in der Art eines Dorns 76 entgegengesetzt der Einsteckrichtung E in die Aufnahme 44.

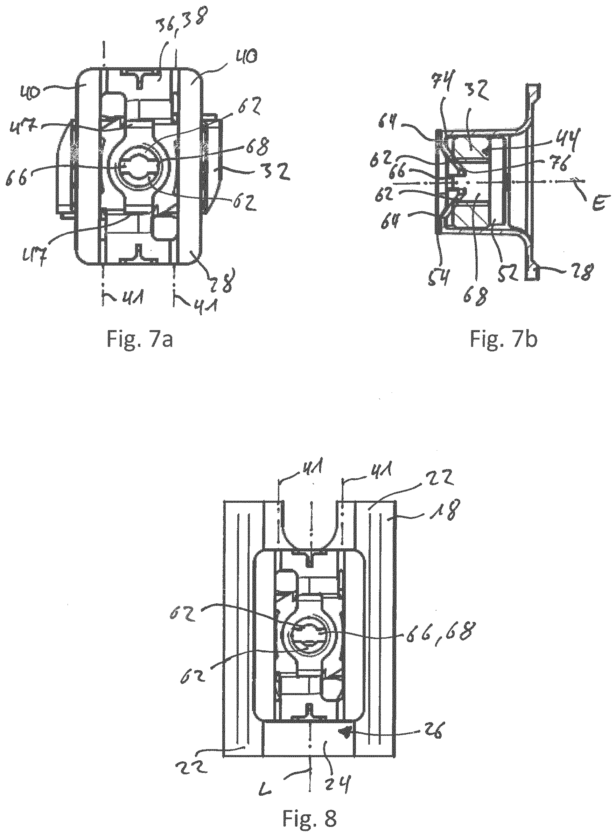

Die Halteeinrichtung 60 erstreckt sich in eine Bohrung 68 der Gewindeplatte 32 und fixiert so die Gewindeplatte 32 in der Aufnahme 44. Wie in Figur 7b zu sehen ist, ragt das freie Ende 76 in die Bohrung 68 und liegt am Bohrungsdurchmesser an, so dass die Gewindeplatte 32 spielfrei gehalten ist, wobei die Bohrung 68 zur Drehachse D zentriert ist.

Wie in Figur 7b des Weiteren zu sehen ist, nimmt der Umkreisdurchmesser der Halteeinrichtung 60 vom freien Ende 76 weg zu, so dass sich die Halteeinrichtung 60 zu ihrem freien Ende hin verjüngt, wodurch sich die Halteeinrichtung 60 bei Bohrungen 68 mit verschiedenen Durchmessern unterschiedlich weit in die Bohrung 68 erstrecken und jeweils am unteren Rand der Bohrung anliegen kann.

Wie insbesondere in den Figuren 3b und 4d zu sehen ist, weist die Halteeinrichtung 60 zwei, in Umfangsrichtung bezüglich der Durchtrittsöffnung 46 gleichmäßig verteilt angeordnete Halteelemente 62 auf. Jedes der Halteelemente 62 ist jeweils über einer Federlasche 64 federnd mit dem Rahmen 54 verbunden. Genau genommen federn die Halteelemente 62 im Wesentlichen um einen Kreisbahn, deren Mittelpunkt jeweils der Anbindungspunkt der Federlaschen an der Haltevorrichtung 30 ist. Der Abstand der Außenwandung der Halteelemente 62 von der Drehachse D nimmt in Einsteckrichtung E zu. Die Umhüllende der Halteelemente 62 weist im Wesentlichen eine konusförmige Oberfläche auf.

Des Weiteren weist die Halteeinrichtung 60 eine in Einsteckrichtung E verlaufende, konzentrisch zur Durchtrittsöffnung 46 angeordnete Öffnung 66 auf. Da die Halteelemente 62 federnd gelagert sind, können diese auch in radialer Richtung bezüglich der Durchtrittsöffnung 46 federnd nachgeben, so dass die Öffnung 66 senkrecht zur Einsteckrichtung E, also bezüglich der Durchtrittsöffnung 46 in radialer Richtung, elastisch aufweitbar ist.

Wie in den Figuren 3a und 3b zu sehen ist, ist die Haltevorrichtung 30 über als Federlaschen ausgebildete Federelemente 47 mit der Deckplatte 28 verbunden, so dass die Haltevorrichtung 30 in Einsteckrichtung E federnd mit der Deckplatte 28 gekoppelt ist. Die Federlaschen erstrecken sich bogenförmig zwischen der Deckplatte 28 und der Haltevorrichtung 30, wobei ein an der Haltevorrichtung 30 vorgesehener Abschnitt im Wesentlichen in Einsteckrichtung E verläuft und ein an der Deckplatte 28 vorgesehener Abschnitt im Wesentlichen in der Ebene der Deck-platte 28 verläuft. Durch die Federelemente 47 ist die Gewindeplatte 32 in Einsteckrichtung E relativ zur Deckplatte 28 elastisch verschiebbar.

Die Gewindestange 34 weist ein zum Innengewinde der Gewindeplatte 32 korrespondierendes Außengewinde auf, mit dem sich die als Schraube ausgebildete Gewindestange 34 in die Bohrung der Gewindeplatte 32 erstreckt. Die Gewindestange 34 stützt sich des Weiteren mit einem Kopf 35 am Anbauteil 12 ab.

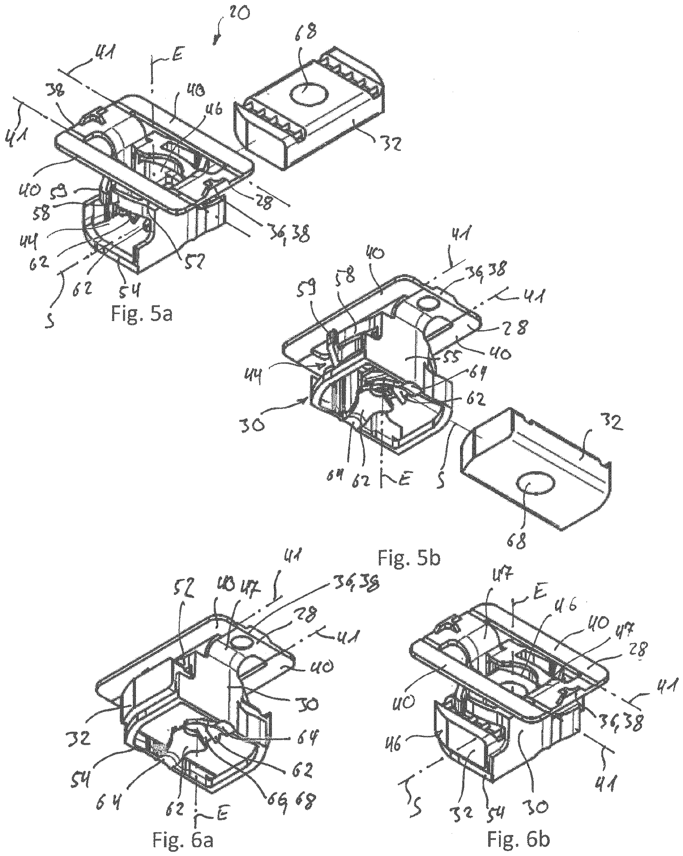

Zur Befestigung des Anbauteils 12 an der Profilschiene 18 wird zunächst eine Gewindeplatte 32 in Einschubrichtung S in die Aufnahme 44 eigeschoben (Figuren 5a und 5b). Die Gewindeplatte 32 ist im Wesentlichen rechteckig ausgebildet, wobei die Breite der Gewindeplatte 32 kleiner ist als der Abstand der beiden Schlitzflanken 24 und die Länge der Gewindeplatte 32 größer ist als der Abstand der beiden Schlitzflanken 24 und im Wesentlichen der Breite des Aufnahmeraums 26 entspricht. Die Gewindeplatte 32 hat des Weiteren eine Bohrung 68 mit einem Innengewinde.

Die Halteelemente 62 können in Einsteckrichtung E so weit federnd nachgeben, so dass diese das Einschieben der Gewindeplatte 32 nicht oder nur geringfügig behindern. Insbesondere können diese vollständig aus der Aufnahme 44 herausfedern. Sobald die Gewindeplatte 32 so weit in die Aufnahme 44 eingeschoben ist, dass die Bohrung 68 konzentrisch zur Durchtrittsöffnung 46 liegt, federn die Halteelemente 62 in die Bohrung 68. Die Halteelemente 62 federn so weit in die Bohrung 68 ein, bis die radiale Außenseite der Halteelemente 62 jeweils am unteren Rand des Bohrungsdurchmessers der Bohrung 68 anliegt (Figuren 6a und 6b). Da der Querschnitt der Halteeinrichtung 62 am ersten Ende 74 größer ist als der Bohrungsdurchmesser der Bohrung 68 und der Querschnitt der Halteeinrichtung 60 am zweiten Ende 76 kleiner ist als der Durchmesser der Bohrung 68, ist die Gewindeplatte 32 in der Aufnahme 44 so zentriert, dass die Bohrung 68 konzentrisch zur Durchtrittsöffnung 46 angeordnet ist.

Die Gewindestange 34 kann anschließend durch die Durchtrittsöffnung 46 in die Bohrung 68 der Gewindeplatte 32 eingeführt werden. Die Gewindestange 34 kann dabei vor oder nach dem Einsetzen der Befestigungsvorrichtung 20 in die Profilschiene 18 eingeschoben werden.

Da die Halteelemente 62 federnd gelagert sind, kann die Gewindestange 34 das freie Ende 76 bzw. die Halteelemente 62 aus der Bohrung 68 herausdrängen. Insbesondere kann sich die Gewindestange 34 zwischen den aus der Bohrung 68 herausgedrängten Halteelemente 62 durch die Öffnung 66 erstrecken. Wird die Gewindestange 34 aus der Bohrung 68 herausgedreht, können die Halteelemente 62 wieder in die Bohrung 68 einfedern und die Gewindeplatte 32 halten.

Nach dem Einsetzen der Gewindeplatte 32 in die Aufnahme 44 wird die Befestigungsvorrichtung 20 mit der Gewindeplatte 32 so ausgerichtet, dass die Längsrichtung der Gewindeplatte 32 im Wesentlichen der Längsrichtung L des Längsschlitzes 22 entspricht. Die Befestigungsvorrichtung 20 wird so weit in Einsteckrichtung E in den Längsschlitz 22 in eine Zwischenmontageposition eingeschoben, bis die Deckplatte 28 an den Schlitzflanken 24 aufliegt und sich die Gewindeplatte 32 in Einsteckrichtung E hinter den Schlitzflanken befindet. Die Breite der Haltevor-richtung 30 sowie die Breite der Gewindeplatte 32 sind kleiner als die Breite des Längsschlitzes 22, so dass die Haltevorrichtung 30 mit der Gewindeplatte 32 in den Längsschlitz 22 eingeschoben werden kann.

Anschließend wird die Befestigungsvorrichtung 20 in Drehrichtung D in eine Vormontageposition gedreht, in der die Gewindeplatte 32 die Schlitzflanken 24 hintergreift. Vorzugsweise wird die Befestigungsvorrichtung 20 um ca. 90° gedreht. Wie in Figur 8 zu sehen ist, verlaufen die Sollverformungsstellen 41 zwischen der Grundplatte 38 und den Seitenplatten 40 in dieser Position in Längsrichtung L, wobei sich die Sollverformungsstellen 41 in Einsteckrichtung E über dem Längsschlitz 22 befinden.

In dieser Vormontageposition sowie in der vorangehend beschriebenen Zwischenmontageposition liegen die Federanordnungen 56 an den einander zugewandten Rändern der Schlitzflanken 24 an und zentrieren die Befestigungsvorrichtung 20 im Längsschlitz 22 und halten diese spielfrei, so dass die Befestigungsvorrichtung 20 nicht aus dem Längsschlitz 22 fallen kann. Da die Federanordnungen 56 jeweils zwei Federlaschen 58, 59 aufweisen, ist die Befestigungsvorrichtung 20 zuverlässig, auch bei einer Drehung entgegen der Drehrichtung D, im Längsschlitz 22 zentriert und durch Klemmung gehalten.

An der Deckplatte 28, der Haltevorrichtung 30 und/oder an der Gewindeplatte 32 können AnSchläge vorgesehen sein, die ein Drehen der Befestigungsvorrichtung 20 in Drehrichtung D über die Vormontageposition hinaus verhindern. Beispielsweise sind die Anschläge an den Federlaschen 58, 59 vorgesehen.

Abschließend wird die Gewindeplatte 32 durch die Gewindestange 34 entgegen der Einsteckrichtung E gegen das Anbauteil 12 gezogen, um die Schlitzflanken 24 zwischen dem Anbauteil 12 und der Gewindeplatte 32 zu verklemmen. Da die Haltevorrichtung 30 federnd mit der Deckplatte 28 verbunden ist, können die Deckplatte 28 und die Haltevorrichtung 30 aufeinander zu bewegt werden.

Die Deckplatte 28 wird dabei vom Anbauteil 12 in den Längsschlitz 22 gedrängt, wobei die Seitenplatten 40 durch die Schlitzflanken 24 um die Sollverformungsstellen 41 umgefaltet werden, so dass die Deckplatte 28 in den Längsschlitz 22 eintauchen kann. Die Seitenplatten 40 gleiten dabei auf den Schlitzflanken 24, die nach oben, also auf der dem Aufnahmeraum 26 abgewandten Seite, abgerundete Kanten aufweisen.

In der Endmontageposition ist die Deckplatte 28 in den Längsschlitz 22 eingetaucht und das Anbauteil 12 liegt unmittelbar auf den Schlitzflanken 24 der Profilschiene 18 auf. Die Schlitzflanken 24 sind also unmittelbar zwischen der Gewindeplatte 32 und dem Anbauteil 12 geklemmt. Die Deckplatte 28 befindet sich nicht im Kraftfluss zwischen der Gewindeplatte 32 bzw. dem Anbauteil 12 und der Profilschiene 18.

Beispielsweise besteht die Befestigungsvorrichtung 20 aus Kunststoff und die Gewindeplatte 32 sowie die Profilschiene 18 sind aus Metall hergestellt. Bei Verwendung der vorstehend beschriebenen Befestigungsvorrichtung 20 befindet sich nach dem Spannen der Gewindeplatte 32 gegen die Schlitzflanken 24 bzw. gegen die Last in der endgültigen Montageposition unter Last somit kein Kunststoff im Kraftfluss, wodurch die Zuverlässigkeit der Verbindung des Anbauteils 12 an der Profilschiene 18 erhöht werden kann.

Durch die Halte- und Zentriervorrichtung 60 wird die Gewindeplatte 32 in der Haltevorrichtung 30 fixiert, so dass diese nicht während der Montage aus der Aufnahme 44 fallen kann. Da die Halteelemente 62 federnd ausgebildet sind, können diese auch unterschiedliche Dicken der Gewindeplatte 32 ausgleichen. Insbesondere kann die Höhe der Aufnahme 44 in Einsteckrichtung E auch größer sein als die Dicke der Gewindeplatte 32, wobei die Halteeinrichtung 60 die Gewindeplatte 32 federbeaufschlagt gegen die Oberseite oder die Unterseite der Aufnahme 44 drängt.

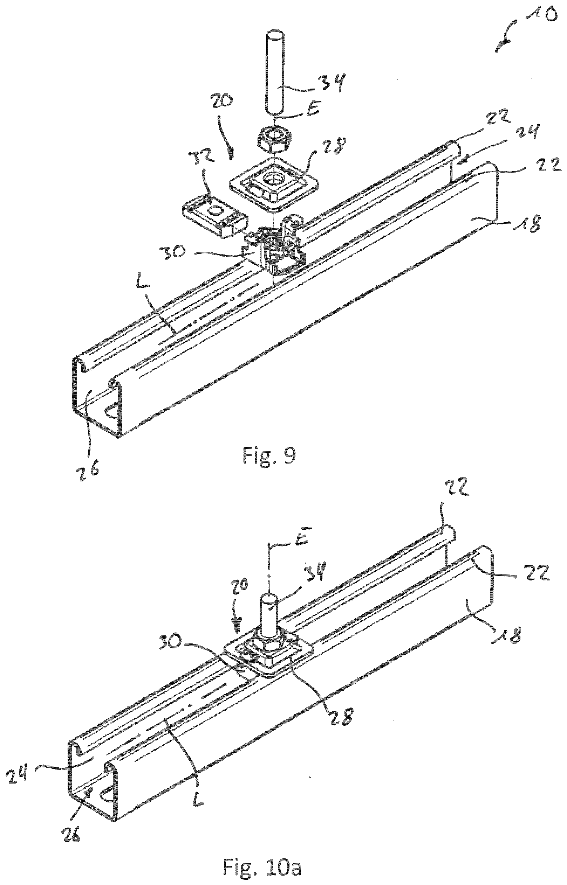

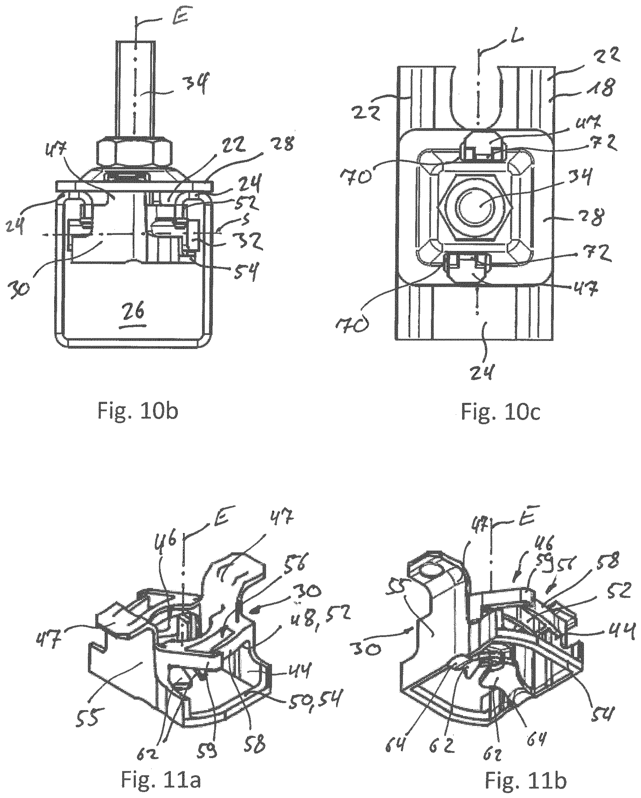

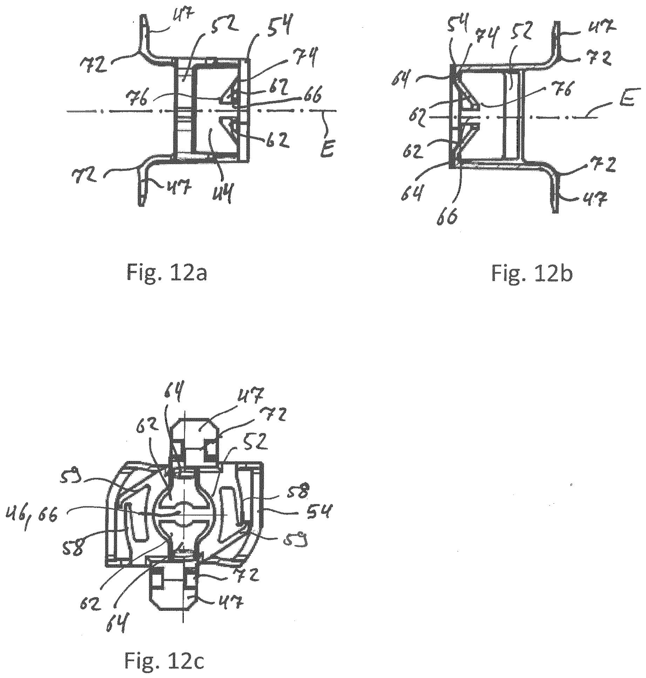

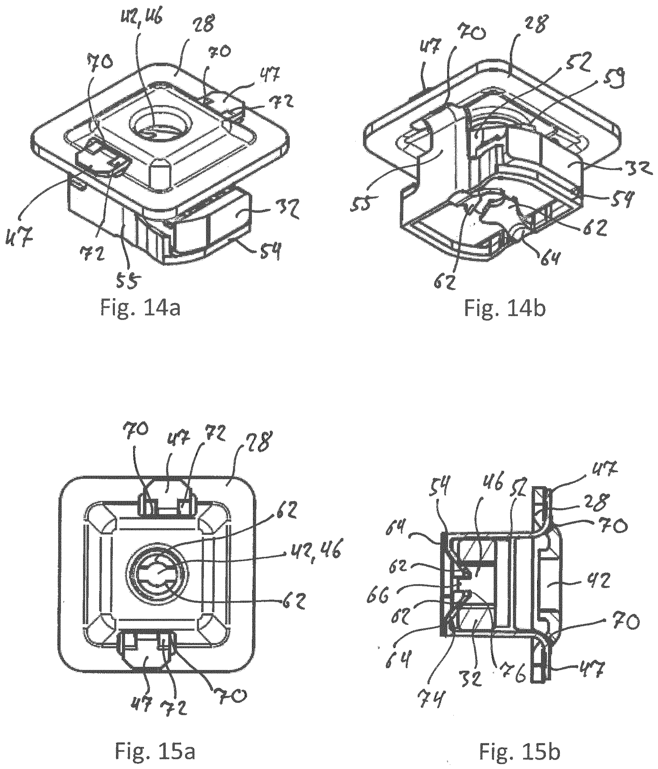

Eine zweite Ausführungsform einer Befestigungsbaugruppe 10 bzw. einer Befestigungsvorrichtung 20 ist in den Figuren 9 bis 15b gezeigt.

Der grundsätzliche Aufbau sowie die Funktionsweise entsprechen der vorstehend beschriebenen Befestigungsbaugruppe 10.

Anders als im vorgehend beschriebenen Ausführungsbeispiel ist aber die Deckplatte 28 nicht zwischen einer Vormontageposition und einer Endmontageposition verformbar. Die Deckplatte 28 ist starr ausgebildet und kann nicht zwischen den Schlitzflanken 24 eintauchen.

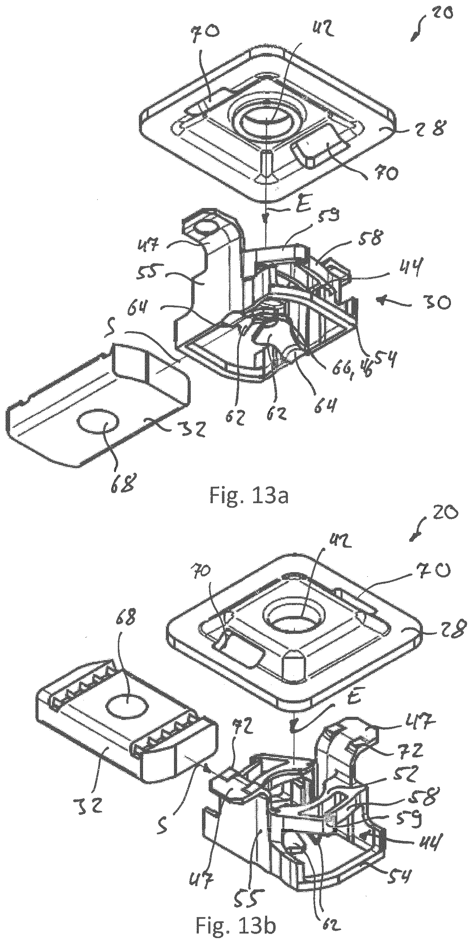

Des Weiteren sind die Federelemente 47 nicht starr an der Deckplatte 28 befestigt, sondern verschiebbar an dieser gelagert. Wie insbesondere in den Figuren 13a und 13b zu sehen ist, weist die Deckplatte 28 zwei bezüglich der Durchtrittsöffnung 46 diametral gegenüberliegende Aufnahmen 70 auf, die jeweils durch eine sich durch die Deckplatte 28 erstreckende Aussparung gebildet sind.

Die Federelemente 47 sind bogenförmig ausgebildet und erstrecken sich mit einem parallel zur Ebene der Deckplatte 28 verlaufenden Abschnitt in die Aufnahmen 70 und sind in diesen verschiebbar gelagert. Wie insbesondere in Figur 13b zu sehen ist, weisen die Federelemente 47 jeweils ein Rastelement 72 auf, das am Rand der Führung 70 verrastet und somit verhindert, dass die Federelemente 47 aus den Aufnahmen 70 herausrutschen können.

Die maximale Entfernung der Haltevorrichtung 30 von der Deckplatte 28 ist durch die Position der Rastelemente 72 festgelegt. Die Haltevorrichtung 30 kann so weit von der Deckplatte 28 in Einsteckrichtung weg bewegt werden, bis die Rastelemente 72 am Rand der Führung 70 anliegen. Vorzugsweise sind die Federelemente 47 so ausgebildet, dass die Haltevorrichtung 30 von der Deckplatte 28 weg, also die Rastelemente 72 gegen den Rand der Führung 70, gedrängt werden.

Entgegen der Einsteckrichtung kann die Haltevorrichtung 30 auf die Deckplatte 28 zu bewegt werden, wobei die Federelemente 47 nachgeben können und die Federelemente 47 in die aufnahmen 70 eintauchen, also relativ zur Deckplatte 28 verschoben werden können.

Die Haltevorrichtung ist also mehrteilig aufgebaut, nämlich aus einer Deckplatte 28 einer separaten Haltevorrichtung 30 sowie einer Gewindeplatte 32 und einer Gewindestange 34. Die Deckplatte 28 und die Haltevorrichtung 30 können so beispielsweise aus verschiedenen Materialien hergestellt werden. Beispielsweise kann die Deckplatte 28 aus einem relativ steifen bzw. druckstabilen Material hergestellt werden. Die Haltevorrichtung 30 muss dagegen nur geringe Kräfte aufnehmen, so dass diese aus einem relativ leichten und flexiblen Material hergestellt werden kann. Insbesondere können die Deckplatte 28 und die Haltevorrichtung 30 aber auch aus dem gleichen Material hergestellt werden. Die getrennte Herstellung der Deckplatte 28 und der Haltevorrichtung 30 bietet Vorteile, da diese einfacher herzustellen sind, beispielsweise in einem Spritzgussverfahren.

Die Erfindung ist nicht auf eine der vorbeschriebenen Ausführungsformen beschränkt, sondern in vielfältiger Weise abwandelbar.

### Bezugszeichenliste

| | | | |
|---|---|---|---|
| 10 | Befestigungsbaugruppe | 50 | Unterseite der Aufnahme |
| 12 | Anbauteil | 52 | Rahmen |
| 14 | Schenkel des Anbauteils | 54 | Rahmen |
| 16 | Bohrung des Anbauteils | 55 | |
| 18 | Profilschiene | 56 | Federanordnung |
| 20 | Befestigungsvorrichtung | 58 | Federlasche |
| 22 | Längsschlitz | 59 | Federlasche |
| 24 | Schlitzflanken | 60 | Halteeinrichtung |
| 26 | Aufnahmeraum | 62 | Halte- und Zentrierelement |
| 28 | Deckplatte | 64 | Federlasche |
| 30 | Haltevorrichtung | 66 | Öffnung |
| 32 | Gewindeplatte | 68 | Bohrung |
| 34 | Gewindestange | 70 | Aufnahme |
| 35 | Kopf der Gewindestange | 72 | Rastelement |
| 36 | Grundplatte | 74 | erstes Ende der Halteeinrichtung |
| 38 | Stege | 76 | freies Ende der Halteeinrichtung/Dorn-, |
| 40 | Seitenplatten | | |
| 41 | Sollverformungsstelle | | |
| 42 | Öffnung in Deckplatte | | |
| 44 | Aufnahme | E | Einsteckrichtung |
| 46 | Durchtrittsöffnung | L | Längsrichtung |
| 47 | Federelement | S | Einschubrichtung |
| 48 | Oberseite der Aufnahme | | |

## Patentansprüche

1. Befestigungsvorrichtung (20) zum Verklemmen in einer Profilschiene (18) durch Eindrehen um eine Drehachse (D), die einen im Wesentlichen C-förmigen Querschnitt und einen Längsschlitz (22) mit gegenüberliegenden Schlitzflanken (24) aufweist, wobei die Befestigungsvorrichtung eine Deckplatte (28) zur Auflage auf der Profilschiene (18), eine Gewindeplatte (32), die eine Gewindebohrung (68) aufweist und eine Länge größer als die Breite des Längsschlitzes (22) und eine Breite kleiner als die Breite des Längsschlitzes (22) besitzt, und eine an der Deckplatte (28) angeordneten Haltevorrichtung (30) für die Gewindeplatte (32) zum Einstecken in die Profilschiene (18) aufweist, wobei zwischen der Deckplatte (28) und der Gewindeplatte (32) bezüglich der Drehachse (D) diametral gegenüberliegende Federanordnungen (56) zur Anlage an den Schlitzflanken (24) des Längsschlitzes (22) vorgesehen sind, wobei die Federanordnungen (56) zum Verklemmen der Befestigungsvorrichtung (20) gegen die Schlitzflanken (24) des Längsschlitzes (22) vorgesehen sind und jeweils zwei sich von der Haltevorrichtung (30) bezüglich der Drehachse (D) radial nach außen weg erstreckende, gekrümmte Federlaschen (58, 59) aufweisen, die sich jeweils bezüglich einer Umfangsrichtung um die Haltevorrichtung (30) in entgegengesetzte Richtungen erstrecken.

2. Befestigungsvorrichtung nach Anspruch 1, **dadurch gekennzeichnet, dass** sich die Federlaschen (58, 59) einer Federanordnung (56) jeweils aufeinander zu erstrecken.

3. Befestigungsvorrichtung nach einem der Ansprüche 1 und 2, **dadurch gekennzeichnet, dass** sich die Federlaschen (58, 59) einer Federanordnung (56) in bezüglich der Drehachse (D) radialer Richtung überlappen.

4. Befestigungsvorrichtung nach Anspruch 3, **dadurch gekennzeichnet, dass** die radial innenliegende Federlasche (58) ein radial einwärts umgebogenes freies Ende aufweist.

5. Befestigungsvorrichtung nach einem der vorhergehenden Ansprüche, **dadurch gekennzeichnet, dass** die Federlaschen (58, 59) einer Federanordnung (56) unterschiedliche Krümmungen aufweisen.

6. Befestigungsvorrichtung nach einem der vorhergehenden Ansprüche, **dadurch gekennzeichnet, dass** an zumindest einer Federlasche (58, 59) ein Drehanschlag vorgesehen ist, der ein Überdrehen der Befestigungsvorrichtung (20) in der Profilschiene (18) verhindert.

7. Befestigungsvorrichtung nach einem der vorhergehenden Ansprüche, **dadurch gekennzeichnet, dass** die Haltevorrichtung (30) einen in Umfangsrichtung umlaufenden, insbesondere ringförmigen, Rahmen (52) aufweist, an dem die Federlaschen (58, 59) angeordnet sind.

8. Befestigungsvorrichtung nach einem der vorhergehenden Ansprüche, **dadurch gekennzeichnet, dass** eine Gewindestange (34) oder eine Schraube mit einem zum Innengewinde der Gewindeplatte (32) korrespondierenden Außengewinde vorgesehen ist, die sich in das Innengewinde der Gewindeplatte (32) eingedreht ist und über die der Gewindeplatte entgegengesetzten Seite der Deckplatte (28) hervorsteht.

9. Befestigungsvorrichtung nach einem der vorhergehenden Ansprüche, **dadurch gekennzeichnet, dass** die Haltevorrichtung (30) mit den Federlaschen (58, 59) einstückig aus Kunststoff gefertigt ist.

10. Befestigungsbaugruppe mit einer Befestigungsvorrichtung nach einem der vorhergehenden Ansprüche und mit einer Profilschiene (18), die einen im Wesentlichen C-förmigen Querschnitt und einen Längsschlitz (22) mit gegenüberliegenden Schlitzflanken (24) aufweist, wobei die Länge der Gewindeplatte größer ist als die Breite des Längsschlitzes (22) und die Breite der Gewindeplatte (32) kleiner ist als die Breite des Längsschlitzes (22), wobei die Befestigungsvorrichtung (20) in einer ersten Orientierung, in der die Längsrichtung der Gewindeplatte der Längsrichtung des Längsschlitzes entspricht, mit der Haltevorrichtung (30) in eine Zwischenmontageposition in den Längsschlitz (22) einführbar ist, in der die Deckplatte (28) auf der Profilschiene (18) aufliegt, wobei die Befestigungsvorrichtung (20) von der Zwischenmontageposition um die Drehachse (D) in eine Vormontageposition drehbar ist, in der die Gewindeplatte (32) die Ränder (24) des Längsschlitzes (22) hintergreift und in der zumindest eine Federlasche (58, 59) jeder Federanordnung (56) an den Schlitzflanken des Längsschlitzes anliegt.

11. Befestigungsbaugruppe nach Anspruch 10, **dadurch gekennzeichnet, dass** an der Deckplatte (28) und/oder an der Haltevorrichtung (30) zumindest ein Drehanschlag vorgesehen ist, der in der Vormontageposition an der Profilschiene (18) anliegt und ein Drehen in Montagerichtung über die Vormontageposition hinaus verhindert.

## Claims

1. Fastening device (20) to be clamped in a profile rail (18) by rotation about an axis of rotation (D) which has a substantially C-shaped cross section and a longitudinal slot (22) having opposite slot flanks (24), wherein the fastening device has a cover plate (28) for resting on the profile rail (18), a threaded plate (32) which has a threaded hole (68) and has a length greater than the width of the longitudinal slot (22) and a width smaller than the width of the longitudinal slot (22), and a holding device (30) for the threaded plate (32), arranged on the cover plate (28), to be plugged into the profile rail (18), wherein spring arrangements (56) located diametrically opposite with respect to the axis of rotation (D) are provided between the cover plate (28) and the threaded plate (32) to make contact with the slot flanks (24) of the longitudinal slot (22), wherein the spring arrangements (56) are provided for clamping the fastening device (20) against the slot flanks (24) of the longitudinal slot (22) and each have two curved spring lugs (58, 59) which extend radially outwards away from the holding device (30) with respect to the axis of rotation (D), and each of which extends in opposite directions around the holding device (30) with respect to a circumferential direction.

2. Fastening device according to claim 1, **characterised in that** the spring lugs (58, 59) of a spring arrangement (56) each extend towards one another.

3. Fastening device according to any one of claims 1 and 2, **characterised in that** the spring lugs (58, 59) of a spring arrangement (56) overlap in a radial direction with respect to the axis of rotation (D).

4. Fastening device according to claim 3, **characterised in that** the radially inner spring lug (58) has a radially inwardly bent free end.

5. Fastening device according to any one of the preceding claims, **characterised in that** the spring lugs (58, 59) of a spring arrangement (56) have different curvatures.

6. Fastening device according to any one of the preceding claims, **characterised in that** on at least one spring lug (58, 59), a rotational stop is provided which prevents the fastening device (20) from over-rotating in the profile rail (18).

7. Fastening device according to any one of the preceding claims, **characterised in that** the holding device (30) has an in particular annular frame (52) which runs around in the circumferential direction and on which the spring lugs (58, 59) are arranged.

8. Fastening device according to any one of the preceding claims, **characterised in that** a threaded rod (34) or a screw with an outer thread corresponding to the inner thread of the threaded plate (32) is provided, and is screwed into the inner thread of the threaded plate (32) and projects beyond the side of the cover plate (28) opposite the threaded plate.

9. Fastening device according to any one of the preceding claims, **characterised in that** the holding device (30) together with the spring lugs (58, 59) is made in one piece from plastic.

10. Fastening assembly having a fastening device according to any one of the preceding claims and having a profile rail (18) which has a substantially C-shaped cross-section and a longitudinal slot (22) with opposite slot flanks (24), wherein the length of the threaded plate is greater than the width of the longitudinal slot (22) and the width of the threaded plate (32) is smaller than the width of the longitudinal slot (22),
wherein the fastening device (20), in a first orientation in which the longitudinal direction of the threaded plate corresponds to the longitudinal direction of the longitudinal slot, can be inserted into the longitudinal slot (22) with the holding device (30) in an intermediate mounting position in which the cover plate (28) rests on the profile rail (18),
wherein the fastening device (20) is rotatable from the intermediate mounting position about the axis of rotation (D) into a pre-mounting position in which the threaded plate (32) engages behind the edges (24) of the longitudinal slot (22) and in which at least one spring lug (58, 59) of each spring arrangement (56) rests against the slot flanks of the longitudinal slot.

11. Fastening assembly according to claim 10, **characterised in that** at least one rotational stop is provided on the cover plate (28) and/or on the holding device (30), which stop rests against the profile rail (18) in the pre-mounting position and prevents rotation in the mounting direction beyond the pre-mounting position.

## Revendications

1. Dispositif de fixation (20) à coincer dans un rail profilé (18) par vissage autour d'un axe de rotation (D) qui présente une section transversale sensiblement en forme de C et une fente longitudinale (22) avec des flancs de fente (24) opposés, dans lequel le dispositif de fixation présente une plaque de recouvrement (28) pour l'appui sur le rail profilé (18), une plaque filetée (32) qui présente un perçage fileté (68) et possède une longueur supérieure à la largeur de la fente longitudinale (22) et une largeur inférieure à la largeur de la fente longitudinale (22), et un dispositif de retenue (30) agencé au niveau de la plaque de recouvrement (28) pour la plaque filetée (32) pour l'enfichage dans le rail profilé (18), dans lequel des assemblages de ressort (56) diamétralement opposés par rapport à l'axe de rotation (D) sont prévus entre la plaque de recouvrement (28) et la plaque filetée (32) pour l'appui contre les flancs de fente (24) de la fente longitudinale (22), dans lequel les assemblages de ressort (56) sont prévus pour coincer le dispositif de fixation (20) contre les flancs de fente (24) de la fente longitudinale (22) et présentent respectivement deux jumelles de ressort (58, 59) courbées, s'étendant radialement vers l'extérieur depuis le dispositif de retenue (30) par rapport à l'axe de rotation (D), jumelles qui s'étendent dans des sens opposés autour du dispositif de retenue (30) respectivement par rapport à un sens périphérique.

2. Dispositif de fixation selon la revendication 1, **caractérisé en ce que** les jumelles de ressort (58, 59) d'un agencement de ressort (56) s'étendent respectivement l'une vers l'autre.

3. Dispositif de fixation selon l'une quelconque des revendications 1 et 2, **caractérisé en ce que** les jumelles de ressort (58, 59) d'un agencement de ressort (56) se chevauchent dans le sens radial par rapport à l'axe de rotation (D).

4. Dispositif de fixation selon la revendication 3, **caractérisé en ce que** la jumelle de ressort (58) radialement intérieure présente une extrémité libre repliée radialement vers l'intérieur.

5. Dispositif de fixation selon l'une quelconque des revendications précédentes, **caractérisé en ce que** les jumelles de ressort (58, 59) d'un agencement de ressort (56) présentent différentes courbures.

6. Dispositif de fixation selon l'une quelconque des revendications précédentes, **caractérisé en ce qu'**une butée rotative est prévue au niveau d'au moins une jumelle de ressort (58, 59), butée qui empêche une sur-rotation du dispositif de fixation (20) dans le rail profilé (18).

7. Dispositif de fixation selon l'une quelconque des revendications précédentes, **caractérisé en ce que**le dispositif de retenue (30) présente un cadre (52), en particulier annulaire, tournant dans le sens périphérique, cadre au niveau duquel les jumelles de ressort (58, 59) sont agencées.

8. Dispositif de fixation selon l'une quelconque des revendications précédentes, **caractérisé en ce qu'**une tige filetée (34) ou une vis est prévue avec un filetage extérieur correspondant au filetage intérieur de la plaque filetée (32) qui est vissé dans le filetage intérieur de la plaque filetée (32) et fait saillie au-delà du côté opposé à la plaque filetée de la plaque de recouvrement (28).

9. Dispositif de fixation selon l'une quelconque des revendications précédentes, **caractérisé en ce que** le dispositif de retenue (30) avec les jumelles de ressort (58, 59) est fabriqué d'un seul tenant en matière plastique.

10. Assemblage de fixation avec un dispositif de fixation selon l'une quelconque des revendications précédentes et avec un rail profilé (18) qui présente une section transversale sensiblement en forme de C et une fente longitudinale (22) avec des flancs de fente (24) opposés, dans lequel la longueur de la plaque filetée est supérieure à la largeur de la fente longitudinale (22) et la largeur de la plaque filetée (32) est inférieure à la largeur de la fente longitudinale (22),
dans lequel le dispositif de fixation (20) dans une première orientation, dans laquelle le sens longitudinal de la plaque filetée correspond au sens longitudinal de la fente longitudinale, peut être introduit dans la fente longitudinale (22) dans une position de montage intermédiaire avec le dispositif de retenue (30), dans laquelle la plaque de recouvrement (28) repose sur le rail profilé (18),
dans lequel le dispositif de fixation (20) peut être rotatif de la position de montage intermédiaire autour de l'axe de rotation (D) dans une position de prémontage, dans laquelle la plaque filetée (32) vient en prise derrière les bords (24) de la fente longitudinale (22) et repose dans la au moins une jumelle de ressort (58, 59) de chaque assemblage de ressort (56) contre les flancs de la fente longitudinale.

11. Assemblage de fixation selon la revendication 10, **caractérisé en ce qu'** au moins une butée rotative est prévue au niveau de la plaque de recouvrement (28) et/ou au niveau du dispositif de retenue (30), butée qui repose dans la position de prémontage contre le rail profilé (18) et empêche une rotation au-delà de la position de prémontage dans le sens de montage.
